# EUROPEAN PATENT APPLICATION

(11) **EP 4 485 570 A1**
(43) Date of publication of application: **01.01.2025**
(21) Application number: 23822720.1
(22) Date of filing: 20.03.2023
(51) Int. Cl.: H01M 4/36, H01M 4/38, H01M 4/62, H01M 10/0525, H01M 4/134

(54) **NEGATIVE ELECTRODE MATERIAL, AND NEGATIVE ELECTRODE SHEET AND BATTERY COMPRISING SAME**

(30) Priority: 13.06.2022 CN 202210665824
(71) Applicant: Zhuhai CosMX Battery Co., Ltd., Zhuhai, Guangdong 519180 (CN)
(72) Inventor: XUE, Jiachen, Zhuhai, Guangdong 519180 (CN); LIU, Chunyang, Zhuhai, Guangdong 519180 (CN); LI, Suli, Zhuhai, Guangdong 519180 (CN); LI, Junyi, Zhuhai, Guangdong 519180 (CN)
(74) Representative: Murgitroyd & Company
(86) International application number: PCT/CN2023/082513
(87) International publication number: WO 2023/241148

(57) **Abstract**

Disclosed are a negative electrode material, and a negative electrode plate and a battery including the negative electrode material. The negative electrode material includes a silicon material and a carbon material. The silicon material is distributed on a surface and in a pore of the carbon material, to form a silicon-carbon composite material that serves as a core. A surface of the silicon-carbon composite material is coated with a thin protective layer as a shell layer. The carbon material in the negative electrode material has a relatively large quantity of pores that may accommodate the silicon material and provide buffer space for volume expansion of the silicon material. In this way, a carbon skeleton can have a low following volume change when volume expansion and contraction occur in lithium intercalation and deintercalation in amorphous silicon, to present a low cycling volume expansion rate, thereby greatly reducing a fracture of a passivation film on a surface of the negative electrode material.

## Description

### TECHNICAL FIELD

The present disclosure relates to the field of lithium-ion batteries, and specifically, to a negative electrode material, and a negative electrode plate and a battery including the negative electrode material.

### BACKGROUND

Rapid development of new energy technologies such as portable electronic products, electric vehicles, and energy storage power stations impose a higher requirement on energy densities of batteries. However, a theoretical lithium storage capacity of an existing graphite negative electrode is low, which restricts improvement of energy densities of lithium-ion batteries. Silicon has ten times a theoretical specific capacity of graphite, and is an ideal negative electrode for a next-generation lithium-ion battery of high specific energy. However, a large volume change is involved in a charging/discharging process of a silicon negative electrode, which causes a fast attenuation of cycling performance of batteries or large thickness expansion. In addition, poor electronic conductivity and poor ionic conductivity of silicon lead to a low power density of a silicon material. These problems greatly restrict actual application of the silicon negative electrode.

To resolve the foregoing problems, a silicon-carbon composite strategy is proposed in the industry to buffer volume stress of a silicon core during charging and discharging and improve overall conductivity of a composite material. However, in lithium intercalation and deintercalation processes, a conventional silicon-carbon composite material is prone to problems of silicon-carbon separation or an unstable SEI film on a surface of a composite particle, thereby causing continuous attenuation of a battery capacity and increasing a battery volume.

### SUMMARY

To improve a problem of an existing silicon-carbon composite material, the present disclosure provides a negative electrode material, and a negative electrode plate and a battery including the negative electrode material. A silicon material in the negative electrode material is distributed on a surface and in a pore of a carbon material. The structure provides buffer space for volume expansion of the silicon material. Silicon-carbon separation does not occur in a cycle process. A protective layer of the negative electrode material can suppress a reaction between the negative electrode material and an electrolyte solution in a charging/discharging process, thereby improving stability of a SEI film on a surface of a composite particle. The battery assembled based on the negative electrode material has a high cycling capacity retention rate and a low cycling volume expansion rate.

The objective of the present disclosure is implemented by using the following technical solutions:

A negative electrode material is provided. The negative electrode material has a core-shell structure. The core-shell structure includes a shell layer and a core. The shell layer includes at least one of silicon monoxide, silicon dioxide, or lithium silicate. The core includes a carbon material and a silicon material. The carbon material includes a non-graphitizing porous carbon material. The silicon material includes amorphous silicon.

According to an implementation of the present disclosure, the carbon material is a non-graphitizing porous carbon material, and the silicon material is amorphous silicon.

According to an implementation of the present disclosure, a coverage rate of the shell layer on a surface of the core ranges from 33% to 100%, for example, 33%, 50%, 60%, 70%, 80%, 90%, or 100%. In other words, the surface of the core is partially or fully coated with the shell layer, that is, the shell layer is a partially or fully coating structure.

According to an implementation of the present disclosure, the shell layer has a contrast different from the core when being observed by using a transmission electron microscope (TEM). A thickness of the shell layer is less than or equal to 10 nm, for example, ranging from 0.01 nm to 10 nm. For example, the thickness of the shell layer is 0.01 nm, 0.05 nm, 0.1 nm, 0.2 nm, 0.5 nm, 0.8 nm, 1 nm, 2 nm, 3 nm, 4 nm, 5 nm, 6 nm, 7 nm, 8 nm, 9 nm, 10 nm, or any value in a range between any two of the foregoing values.

According to an implementation of the present disclosure, the amorphous silicon is also referred to as non-crystalline silicon, and lattice networks between some atoms of the amorphous silicon are arranged in disorder. A volume expansion rate of the amorphous silicon is less than that of crystalline silicon. A non-graphitizing carbon material has a large quantity of pores that may accommodate the amorphous silicon and provide a conductive network for the amorphous silicon.

According to an implementation of the present disclosure, a median particle size Dv50 of the amorphous silicon ranges from 0.5 nm to 15 µm. For example, the median particle size Dv50 of the amorphous silicon is 0.5 nm, 1 nm, 2 nm, 3 nm, 4 nm, 5 nm, 6 nm, 7 nm, 8 nm, 9 nm, 10 nm, 20 nm, 30 nm, 40 nm, 50 nm, 60 nm, 70 nm, 80 nm, 90 nm, 100 nm, 200 nm, 300 nm, 400 nm, 500 nm, 600 nm, 700 nm, 800 nm, 900 nm, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, or any value in a range between any two of the foregoing values. When internal pores of the non-graphitizing porous carbon material communicate with each other, and silicon content is high, the amorphous silicon grows along the pores to form a dendritic structure whose particle size may reach a micron level. When silicon content is low, the amorphous silicon is dispersed in the pores in a form of small particles.

According to an implementation of the present disclosure, the non-graphitizing porous carbon material is preferably non-graphitizing porous hard carbon. The hard carbon means carbon that is difficult to graphitize at a high temperature above 2500°C.

According to an implementation of the present disclosure, the non-graphitizing porous carbon material may be obtained through preparation in a method known in the art, or may be obtained through commercial purchase.

According to an implementation of the present disclosure, a specific surface area BET of the non-graphitizing porous carbon material ranges from 200 m²/g to 2000 m²/g. For example, the specific surface area BET of the non-graphitizing porous carbon material is 200 m²/g, 300 m²/g, 400 m²/g, 500 m²/g, 600 m²/g, 700 m²/g, 800 m/g, 900 m²/g, 1000 m²/g, 1100 m²/g, 1200 m²/g, 1300 m²/g, 1400 m²/g, 1500 m²/g, 1600 m²/g, 1700 m²/g, 1800 m²/g, 1900 m²/g, 2000 m²/g, or any value in a range between any two of the foregoing values.

According to an implementation of the present disclosure, the specific surface area BET of the non-graphitizing porous carbon material ranges from 900 m²/g to 1300 m²/g.

According to an implementation of the present disclosure, a pore volume of the non-graphitizing porous carbon material ranges from 0.2 cm³/g to 1.2 cm³/g. For example, the pore volume of the non-graphitizing porous carbon material is 0.2 cm³/g, 0.25 cm³/g, 0.3 cm³/g, 0.35 cm³/g, 0.4 cm³/g, 0.45 cm³/g, 0.5 cm³/g, 0.55 cm³/g, 0.6 cm³/g, 0.65 cm³/g, 0.7 cm³/g, 0.75 cm³/g, 0.8 cm³/g, 0.85 cm³/g, 0.9 cm³/g, 0.95 cm³/g, 1 cm³/g, 1.05 cm³/g, 1.1 cm³/g, 1.15 cm³/g, 1.2 cm³/g, or any value in a range between any two of the foregoing values.

According to an implementation of the present disclosure, the pore volume of the non-graphitizing porous carbon material ranges from 0.5 cm³/g to 0.7 cm³/g.

According to an implementation of the present disclosure, a pore diameter of the non-graphitizing porous carbon material ranges from 0.5 nm to 100 nm. For example, the pore diameter of the non-graphitizing porous carbon material is 0.5 nm, 1 nm, 2 nm, 3 nm, 4 nm, 5 nm, 6 nm, 7 nm, 8 nm, 9 nm, 10 nm, 20 nm, 30 nm, 40 nm, 50 nm, 60 nm, 70 nm, 80 nm, 90 nm, 100 nm, or any value in a range between any two of the foregoing values.

According to an implementation of the present disclosure, the negative electrode material corresponds to a diffraction peak 1 in a range of 2θ = 23.0° ± 0.5° in an X-ray powder diffraction (XRD) test, and a ratio x1 of a peak height value (in terms of an intensity value) to a peak width value (in terms of a degree value of 2θ) of the diffraction peak 1 meets that 0 < x1 ≤ 200; and the negative electrode material corresponds to a diffraction peak 2 in a range of 2θ = 28.4° ± 0.5°, and a ratio x2 of a peak height value (in terms of an intensity value) to a peak width value (in terms of a degree value of 2θ) of the diffraction peak 2 meets that 0 < x2 ≤ 500. Preferably, 0 < x1 ≤ 100, and 0 < x2 ≤ 100. When x1 meets that 0 < x1 ≤ 200, it indicates that the negative electrode material includes a carbon material, and the carbon material is a non-graphitizing carbon material. When x2 meets that 0 < x2 ≤ 500, it indicates that the negative electrode material includes a silicon material, and the silicon material is amorphous silicon.

According to an implementation of the present disclosure, the negative electrode material corresponds to a binding energy peak in a range of a total spectrum of 96 eV to 105 eV in an X-ray photoelectron spectroscopy (XPS) test, and the binding energy peak in a high resolution spectrum in a range of 90 eV to 110 eV may be divided (by using common peak division software) at least into a binding energy peak 1 whose area is y1 in 97 eV to 100 eV and a binding energy peak 2 whose area is y2 in 101 eV to 104 eV. Herein, y1 and y2 meet that 0 ≤ y1/y2 ≤ 10. Preferably, 0.2 ≤ y1/y2 ≤ 5. When y1 and y2 meet that 0 ≤ y1/y2 ≤ 10, it indicates that a silicon-containing compound in which a silicon valence is greater than zero exists on the surface of the negative electrode material. In other words, a shell layer containing at least one of silicon monoxide, silicon dioxide, or silicate is correspondingly formed on the surface of the negative electrode material.

According to an implementation of the present disclosure, in the negative electrode material, a mass content a of a carbon element meets that 25% ≤ a < 100%, a mass content b of a silicon element meets that 0 < b < 75%, and 90% ≤ a + b < 100%. Preferably, 25% ≤ a ≤ 95%, and 5% < b < 75%.

According to an implementation of the present disclosure, a specific surface area BET of the negative electrode material ranges from 0.5 m²/g to 20 m²/g. For example, the specific surface area BET of the negative electrode material is 0.5 m²/g, 1 m²/g, 2 m²/g, 3 m²/g, 4 m²/g, 5 m²/g, 6 m²/g, 7 m²/g, 8 m²/g, 9 m²/g, 10 m²/g, 11 m²/g, 12 m²/g, 13 m²/g, 14 m²/g, 15 m²/g, 16 m²/g, 17 m²/g, 18 m²/g, 19 m²/g, 20 m²/g, or any value in a range between any two of the foregoing values.

According to an implementation of the present disclosure, a median particle size Dv50 of the negative electrode material ranges from 1 µm to 20 µm. For example, the median particle size Dv50 of the negative electrode material is 1 µm, 1.2 µm, 1.5 µm, 1.8 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or any value in a range between any two of the foregoing values.

The present disclosure further provides a method for preparing the foregoing negative electrode material. The method includes the following steps:
(1) Put a carbon material into a vapor deposition furnace, then introduce silane gas and carrier gas, and increase a temperature to crack silane, to obtain a silicon-carbon composite material as a core through preparation.
(2) Heat and oxidize the silicon-carbon composite material in step (1) in air, and optionally perform lithiation processing, to obtain the negative electrode material through preparation.

In step (1) in the foregoing method, the carbon material is a non-graphitizing porous carbon material.

In step (1) in the foregoing method, the silane gas is selected from at least one of monosilane, silicoethane, or trichlorosilane.

In step (1) in the foregoing method, the carrier gas is selected from at least one of high-purity argon or high-purity nitrogen.

In step (1) in the foregoing method, a volume ratio of the silane gas to the carrier gas is any ratio, for example, 9:1, 4:1, or 1:1.

In step (1) in the foregoing method, the silane cracking temperature ranges from 300°C to 500°C, for example, 300°C, 350°C, 400°C, 450°C, 480°C, or 500°C.

In step (1) in the foregoing method, a silane cracking time ranges from 6 h to 24 h, for example, 6 h, 7 h, 8 h, 9 h, 10 h, 11 h, 12 h, 13 h, 14 h, 15 h, 16 h, 17 h, 18 h, 19 h, 20 h, 21 h, 22 h, 23 h, or 24 h.

Preferably, the silane cracking time ranges from 6 h to 12 h.

In step (1) in the foregoing method, the silane is cracked in an inert carrier gas atmosphere at 300°C to 500°C to generate ultra-fine amorphous silicon particles, the amorphous silicon particles are deposited in pores and on surfaces of the non-graphitizing porous carbon material, and the amorphous silicon on the surfaces of the non-graphitizing porous carbon material is converted into silicon monoxide or silicon dioxide in a subsequent air oxidation process.

In step (1) in the foregoing method, a mass-to-volume ratio of the carbon material to the silane ranges from 30 g/10.8 L to 30 g/108 L, for example, 30 g/10.8 L, 30 g/21.6 L, 30 g/32.4 L, 30 g/43.2 L, 30 g/54 L, 30 g/64.8 L, 30 g/75.6 L, 30 g/86.4 L, 30 g/97.2 L, or 30 g/108 L.

In step (2) in the foregoing method, the temperature at which the silicon-carbon composite material is heated and oxidized in air ranges from 50°C to 400°C, for example, 50°C, 100°C, 150°C, 200°C, 250°C, 300°C, 350°C, or 400°C; and a time in which the silicon-carbon composite material is heated and oxidized in air ranges from 0.5 h to 25 h, for example, 0.5 h, 1 h, 2 h, 3 h, 4 h, 5 h, 6 h, 7 h, 8 h, 9 h, 10 h, 11 h, 12 h, 13 h, 14 h, 15 h, 16 h, 17 h, 18 h, 19 h, 20 h, 21 h, 22 h, 23 h, 24 h, or 25 h.

In step (2) in the foregoing method, after the silicon-carbon composite material is heated and oxidized in air, the amorphous silicon on the surface of the silicon-carbon composite material may generate silicon monoxide and/or silicon dioxide.

In step (2) in the foregoing method, the lithiation processing is to perform lithiation on silicon monoxide and/or silicon dioxide generated on the surface of the silicon-carbon composite material by using a lithiation reagent to form lithium silicate. The lithiation reagent is selected from one or more of lithium biphenyl, lithium naphthalene, or lithium pyrene. The lithiation reagent is preferably used in a form of a tetrahydrofuran solution.

In the present disclosure, "used in a form of a tetrahydrofuran solution" means dissolving the lithiation reagent in tetrahydrofuran for use.

It is found through research that, in an existing process of preparing a silicon-carbon composite material, a carbon coating layer is usually formed on a surface of a silicon particle (such as nano silicon, a silicon-carbon compound, or a silicon-oxygen compound) in a chemical vapor deposition manner or a polymer pyrolysis manner. However, even though the carbon coating layer formed in this manner is compact at the beginning, the carbon coating layer expands with a core in an expansion process of silicon particles, and the expanded carbon coating layer becomes loose and porous. An electrolyte solution passes through the carbon coating layer to be in contact with the silicon particle core, so that a passivation film is formed on a surface of the silicon particle through a reduction reaction. As cycling continues, the passivation layer repeatedly grows and becomes thicker as the silicon particle core continuously expands and contracts. This process consumes active lithium in a battery and generates extra gas, which leads to continuous attenuation of a capacity of the battery and a continuous increase of the thickness.

The inventors of the present disclosure find through research that, if a porous carbon skeleton is used to accommodate an ultra-fine amorphous silicon structure, the carbon skeleton can have a low following volume change when volume expansion and contraction occur on a silicon core, thereby enhancing stability of a passivation layer on a surface of a silicon-carbon composite material. After further research, the inventors further find that a protective layer (for example, a silicon oxide layer (that is, silicon monoxide and/or silicon dioxide) or a lithium silicate layer) is disposed on the surface of the foregoing silicon-carbon composite material, which can effectively avoid contact between the electrolyte solution and the amorphous silicon of the core, thereby reducing reduction and decomposition of the electrolyte solution and further improving cycling stability of a battery including the negative electrode material.

The present disclosure further provides a negative electrode plate. The negative electrode plate includes the foregoing negative electrode material.

According to an implementation of the present disclosure, the negative electrode plate includes a negative electrode current collector and a negative electrode active material layer on at least one side surface of the negative electrode current collector, and the negative electrode active material layer includes the foregoing negative electrode material.

According to an implementation of the present disclosure, the negative electrode active material layer further includes at least one of graphite, hard carbon, or soft carbon. The graphite includes artificial graphite and/or natural graphite.

According to an implementation of the present disclosure, the negative electrode active material layer further includes a conductive agent. In an instance, the conductive agent is selected from one or more of carbon black, acetylene black, Ketjen black, a carbon fiber, a single-walled carbon nanotube, and a multi-walled carbon nanotube.

According to an implementation of the present disclosure, the negative electrode active material layer further includes a binder. In an instance, the binder is selected from one or more of carboxymethyl cellulose, sodium carboxymethyl cellulose, lithium carboxymethyl cellulose, hydroxypropyl cellulose, cellulose acetate, polyethylene, poly(vinyl alcohol), polyvinyl chloride, polyvinyl fluoride, polyvinylpyrrolidone, polytetrafluoroethylene, polypropylene, styrene-butadiene rubber, and epoxy resin.

According to an implementation of the present disclosure, the negative electrode current collector is selected from one or more of copper foil, copper foil coated with carbon, or perforated copper foil.

According to an implementation of the present disclosure, a mass percentage of each component in the negative electrode active material layer is as follows:
0.5 wt% to 99 wt% of the negative electrode material, 0 wt% to 98.5 wt% of graphite, 0.5 wt% to 15 wt% of the conductive agent, and 0.5 wt% to 15 wt% of the binder.

Preferably, the mass percentage of each component in the negative electrode active material layer is as follows:
48 wt% to 95 wt% of graphite, 1 wt% to 50 wt% of the negative electrode material, 1 wt% to 10 wt% of the conductive agent, and 1 wt% to 10 wt% of the binder.

According to an implementation of the present disclosure, the negative electrode plate may be obtained by using the following method:
The foregoing negative electrode material, optional graphite, the conductive agent, and the binder are mixed in deionized water to obtain a negative electrode slurry. The negative electrode current collector is coated with the negative electrode slurry. Then, drying and slicing are performed. Obtained slices are put into a vacuum oven for drying. Finally, rolling and cutting are performed, to obtain the negative electrode plate.

According to an implementation of the present disclosure, the negative electrode plate may be specifically obtained by using the following method:

The foregoing negative electrode material, optional graphite, the conductive agent, and the binder are mixed in deionized water to obtain a negative electrode slurry. The negative electrode current collector is coated with the negative electrode slurry. Then, drying is performed at 80°C, and then slicing is performed. Obtained slices are put into a vacuum oven for drying at 100°C for 12 h. Finally, rolling and cutting are performed, to obtain the negative electrode plate.

The present disclosure further provides a battery. The battery includes the foregoing negative electrode material or includes the foregoing negative electrode plate.

According to an implementation of the present disclosure, the battery is a lithium-ion battery.

According to an implementation of the present disclosure, the battery further includes a positive electrode plate.

According to an implementation of the present disclosure, the positive electrode plate has a conventional positive electrode plate structure, and includes, for example, a positive electrode current collector and a positive electrode active material layer coated on at least one surface of the positive electrode current collector. The positive electrode active material layer includes a positive electrode material.

In an instance, the positive electrode current collector is a conventional positive electrode current collector. For example, the positive electrode current collector is selected from one or more of aluminum foil, aluminum foil coated with carbon, or perforated aluminum foil.

In an instance, the positive electrode material is selected from conventional positive electrode materials, for example, selected from one or more of lithium iron phosphate, lithium manganese phosphate, lithium vanadium phosphate, lithium iron silicate, lithium cobalt oxide, a nickel-cobalt-manganese ternary material, a nickel-manganese/cobalt-manganese/nickel-cobalt binary material, lithium nickel cobalt manganese aluminum oxide, lithium manganese iron phosphate, lithium nickel oxide, lithium manganese oxide, or a lithium-rich manganese-based material.

According to an implementation of the present disclosure, the battery further includes a separator. In an instance, the separator is selected from conventional separators, for example, selected from one or more of polyethylene or polypropylene.

According to an implementation of the present disclosure, the battery further includes an electrolyte solution. In an instance, the electrolyte solution is a non-aqueous electrolyte solution. The non-aqueous electrolyte solution includes a conventional component that is, for example, selected from a carbonate solvent and lithium salt. In an instance, the carbonate solvent is selected from conventional carbonate solvents, for example, selected from one or more of ethylene carbonate (EC), propylene carbonate (PC), diethyl carbonate (DEC), fluoroethylene carbonate (FEC), dimethyl carbonate (DMC), or ethyl methyl carbonate (EMC). In an instance, the lithium salt is selected from conventional lithium salt, for example, selected from one or more of LiPF₆, LiBF₄, LiSbF₆, LiClO₄, LiCF₃SO₃, LiAlO₄, LiAlCl₄, Li(CF₃SO₂)₂N, LiBOB, and LiDFOB.

Beneficial effects of the present disclosure are as follows:
The present disclosure provides a negative electrode material, and a negative electrode plate and a battery including the negative electrode material. The negative electrode material includes a silicon material and a carbon material. The silicon material is distributed on a surface and in a pore of the carbon material, to form a silicon-carbon composite material that serves as a core. A surface of the silicon-carbon composite material is coated with a thin protective layer as a shell layer. The carbon material in the negative electrode material has a relatively large quantity of pores that may accommodate the silicon material and provide buffer space for volume expansion of the silicon material. In this way, a carbon skeleton can have a low following volume change when volume expansion and contraction occur in lithium intercalation and deintercalation in amorphous silicon, to present a low cycling volume expansion rate, thereby greatly reducing a fracture of a passivation film on a surface of the negative electrode material. The shell layer of the negative electrode material can suppress a reaction between the negative electrode material and an electrolyte solution in a charging/discharging process, thereby further improving stability of the passivation film on the surface of the negative electrode material. The negative electrode material has a high capacity per gram and an initial Coulombic efficiency, so that the battery can have a high cycling capacity retention rate and a low cycling volume expansion rate.

### BRIEF DESCRIPTION OF DRAWINGS

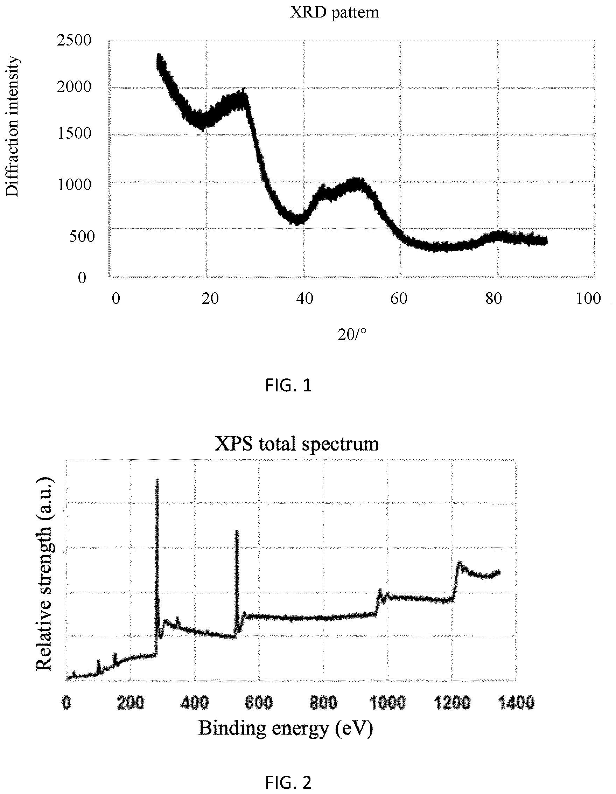

FIG. 1 is an X-ray powder diffraction (XRD) pattern of a negative electrode material according to Example 1 of the present disclosure.
FIG. 2 is a total spectrum of X-ray photoelectron spectroscopy (XPS) of a negative electrode material according to Example 1 of the present disclosure.

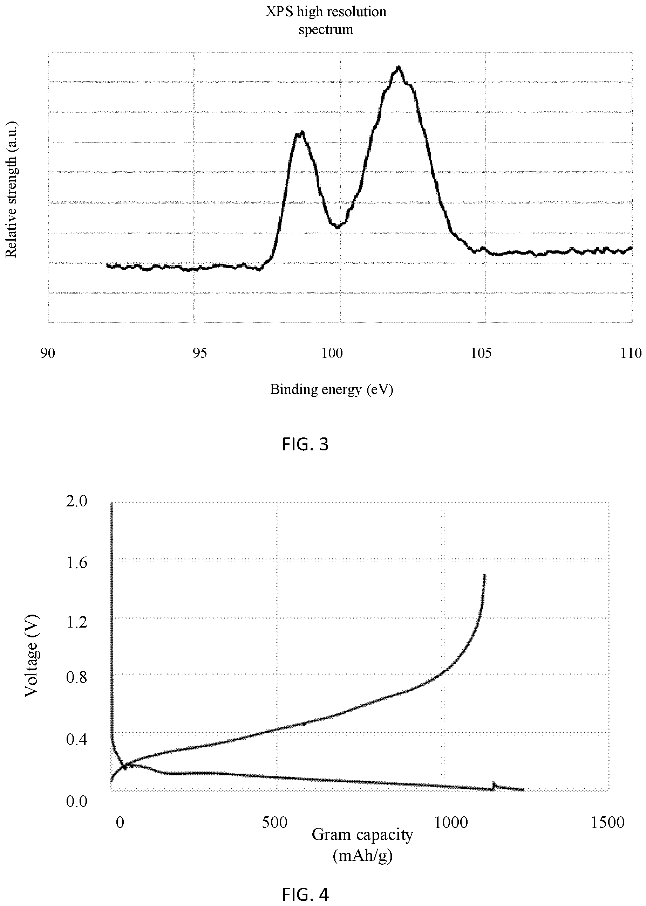

FIG. 3 is a high resolution spectrum of an X-ray photoelectron spectroscopy (XPS) of a negative electrode material in 90 eV to 110 eV according to Example 1 of the present disclosure.
FIG. 4 is a curve of lithium intercalation and lithium deintercalation of a negative electrode material according to Example 1 of the present disclosure.

### DESCRIPTION OF EMBODIMENTS

The present disclosure is further described in detail with reference to specific embodiments below. It should be understood that the following embodiments merely illustrate and explain an example of the present disclosure, and should not be construed as limiting the protection scope of the present disclosure. All technologies implemented based on the foregoing content of the present disclosure are within the protection scope of the present disclosure.

An experimental method used in the following embodiments is a conventional method unless otherwise stated. A reagent, a material, and the like used in the following examples may be all obtained from a commercial channel unless otherwise stated.

In the present disclosure, relative content of an element Si and an element C in a negative electrode material is tested by using an X-ray fluorescence (XRF) or energy dispersive spectroscopy (EDS) analysis method, for example, by using a Thermo Fisher X-ray fluorescence spectrometer or an Oxford energy dispersive spectrometer.

In the present disclosure, an X-ray diffraction (XRD) method is used for a 2θ characteristic diffraction peak. For example, a Shimadzu XRD-6100 X-ray diffractometer is used to conduct a test. A sample quantity used in the test is 0.5 g/cm², a Kα line of Cu is used as an incident X-ray, a working voltage of an X-ray source is 40 kV, a test power is 2 kW, a horizontal coordinate is 2θ in a unit of °, a vertical coordinate is signal strength, a test interval is 10° to 80°, a scanning rate is 4°/min, and a data sampling interval is 0.02°.

In the present disclosure, a transmission electron microscope (TEM) analysis method, for example, a Japan Electron JEM-F200 field emission transmission electron microscope, is used to present a thickness of a shell layer.

In the present disclosure, an X-ray photoelectron spectroscopy (XPS) analysis method, for example, a Thermo Fisher X-ray photoelectron spectrometer, is used to present a type and a content of an element in the shell layer. Peak division of a binding energy peak in a high resolution spectrum of an XPS may be performed by using Origin software (Version ≥ 8.0). A conventional Gaussian function is selected as a function type.

In the present disclosure, a laser particle size test method is used for a median particle size Dv50 of the negative electrode material. For example, a Malvern particle size analyzer is used for measurement. Test steps are as follows: The negative electrode material is dispersed in deionized water containing a dispersing agent (for example, nonylphenol polyoxyethylene ether, where a content ranges from 0.02 wt% to 0.03 wt%) to form a mixture. Sonication is performed on the mixture for 2 minutes. Then, the mixture is put into the Malvern particle size analyzer for a test.

In the present disclosure, a Brunauer-Emmett-Teller (BET) test method is used for a specific surface area and a pore volume of porous carbon. For example, a Tri Star II specific surface analyzer is used for measurement.

In the present disclosure, commercialized porous carbon is a non-graphitizing porous carbon material purchased from Aladdin.

### Example 1

Synthesis of a negative electrode material: 30g commercialized porous carbon (a BET specific surface area is 900 m²/g, and a pore volume is 0.5 cm³/g) was placed into a vapor deposition furnace. Mixed gas of high-purity argon and monosilane in a volume ratio of 9:1 was introduced at a flow rate of 300 sccm. Then, a temperature was raised to 475°C to crack the monosilane, and a total cracking duration was controlled to 10 h. Afterward, a sample was taken out, then placed into a muffle furnace, and heated at 120°C for 8 h, so that amorphous silicon on a surface of a particle was oxidized into silicon dioxide. In this way, the negative electrode material in Example 1 was obtained.

### Example 2

Synthesis of a negative electrode material: 30g commercialized porous carbon (a BET specific surface area is 1300 m²/g, and a pore volume is 0.7 cm³/g) was placed into a vapor deposition furnace. Mixed gas of high-purity argon and monosilane in a volume ratio of 9:1 was introduced at a flow rate of 300 sccm. Then, a temperature was raised to 475°C to crack the monosilane, and a total cracking duration was controlled to 10 h. Afterward, a sample was taken out, then placed into a muffle furnace, and heated at 120°C for 8 h, so that amorphous silicon on a surface of a particle was oxidized into silicon dioxide. In this way, the negative electrode material in Example 2 was obtained.

### Example 3

Synthesis of a negative electrode material: 30g commercialized porous carbon (a BET specific surface area is 1300 m²/g, and a pore volume is 0.7 cm³/g) was placed into a vapor deposition furnace. Mixed gas of high-purity argon and monosilane in a volume ratio of 4:1 was introduced at a flow rate of 300 sccm. Then, a temperature was raised to 475°C to crack the monosilane, and a total cracking duration was controlled to 10 h. Afterward, a sample was taken out, then placed into a muffle furnace, and heated at 120°C for 8 h, so that amorphous silicon on a surface of a particle was oxidized into silicon dioxide. In this way, the negative electrode material in Example 3 was obtained.

### Example 4

Synthesis of a negative electrode material: 30g commercialized porous carbon (a BET specific surface area is 1300 m²/g, and a pore volume is 0.7 cm³/g) was placed into a vapor deposition furnace. Mixed gas of high-purity argon and silicoethane in a volume ratio of 4:1 was introduced at a flow rate of 300 sccm. Then, a temperature was raised to 475°C to crack the silicoethane, and a total cracking duration was controlled to 10 h. Afterward, a sample was taken out, then placed into a muffle furnace, and heated at 120°C for 8 h, so that amorphous silicon on a surface of a particle was oxidized into silicon dioxide. In this way, the negative electrode material in Example 4 was obtained.

### Example 5

Synthesis of a negative electrode material: 30g commercialized porous carbon (a BET specific surface area is 1300 m²/g, and a pore volume is 0.7 cm³/g) was placed into a vapor deposition furnace. Mixed gas of high-purity argon and silicoethane in a volume ratio of 4:1 was introduced at a flow rate of 300 sccm. Then, a temperature was raised to 500°C to crack the silicoethane, and a total cracking duration was controlled to 10 h. Afterward, a sample was taken out, then placed into a muffle furnace, and heated at 120°C for 8 h, so that amorphous silicon on a surface of a particle was oxidized into silicon dioxide. In this way, the negative electrode material in Example 5 was obtained.

### Example 6

Synthesis of a negative electrode material: 30g commercialized porous carbon (a BET specific surface area is 1300 m²/g, and a pore volume is 0.7 cm³/g) was placed into a vapor deposition furnace. Mixed gas of high-purity argon and silicoethane in a volume ratio of 4:1 was introduced at a flow rate of 300 sccm. Then, a temperature was raised to 500°C to crack the silicoethane, and a total cracking duration was controlled to 10 h. Afterward, a sample was taken out, then placed into a muffle furnace, and heated at 200°C for 8 h, so that amorphous silicon on a surface of a particle was oxidized into silicon dioxide. In this way, the negative electrode material in Example 6 was obtained.

### Example 7

Synthesis of a negative electrode material: 30g commercialized porous carbon (a BET specific surface area is 1300 m²/g, and a pore volume is 0.7 cm³/g) was placed into a vapor deposition furnace. Mixed gas of high-purity argon and silicoethane in a volume ratio of 4:1 was introduced at a flow rate of 300 sccm. Then, a temperature was raised to 500°C to crack the silicoethane, and a total cracking duration was controlled to 10 h. Afterward, a sample was taken out, then placed into a muffle furnace, and heated at 200°C for 8 h, so that amorphous silicon on a surface of a particle was oxidized into silicon dioxide. The silicon dioxide was lithiated into lithium silicate by using a lithium biphenyl-tetrahydrofuran solution, washing was performed by using tetrahydrofuran, and then drying was performed. In this way, the negative electrode material in Example 7 was obtained.

### Example 8

Synthesis of a negative electrode material: 30g commercialized porous carbon (a BET specific surface area is 1300 m²/g, and a pore volume is 0.7 cm³/g) was placed into a vapor deposition furnace. Mixed gas of high-purity argon and silicoethane in a volume ratio of 4:1 was introduced at a flow rate of 300 sccm. Then, a temperature was raised to 500°C to crack the silicoethane, and a total cracking duration was controlled to 10 h. Afterward, a sample was taken out, then placed into a muffle furnace, and heated at 50°C for 2 h, so that amorphous silicon on a surface of a particle was oxidized into a mixture of silicon monoxide and silicon dioxide. In this way, the negative electrode material in Example 8 was obtained.

### Example 9

Synthesis of a negative electrode material: 30g commercialized porous carbon (a BET specific surface area is 900 m²/g, and a pore volume is 0.5 cm³/g) was placed into a vapor deposition furnace. Mixed gas of high-purity argon and monosilane in a volume ratio of 9:1 was introduced at a flow rate of 600 sccm. Then, a temperature was raised to 475°C to crack the monosilane, and a total cracking duration was controlled to 24 h. Afterward, a sample was taken out, then placed into a muffle furnace, and heated at 120°C for 8 h, so that amorphous silicon on a surface of a particle was oxidized into silicon dioxide. In this way, the negative electrode material in Example 9 was obtained.

### Comparative Example 1

Synthesis of a negative electrode material: Commercialized bitumen powder (a softening point is 200°C) was dissolved in toluene. Bitumen and nano-silicon were added in a mass ratio of 1:1 into commercialized nano-silicon (a median particle size Dv50 is 50 nm). Then, spraying and drying were performed to remove a toluene solvent, to obtain a silicon material coated with bitumen. Afterward, the silicon material coated with bitumen was placed into a tube furnace to be carbonized at a high temperature of 800°C in an argon atmosphere. In this way, a silicon-carbon composite material in Comparative Example 1 was obtained.

### Comparative Example 2

Synthesis of a negative electrode material: A specific quantity of artificial graphite (a BET specific surface area is 2 m²/g) was placed into a vapor deposition furnace. Mixed gas of high-purity argon and monosilane in a ratio of 9:1 was introduced at a flow rate of 300 sccm. Then, a temperature was raised to 475°C to crack the monosilane, and a total cracking duration was controlled to 10 h. Afterward, a sample was taken out, then placed into a muffle furnace, and heated at 120°C for 8 h, so that amorphous silicon on a surface of a particle was oxidized into silicon dioxide. In this way, the negative electrode material in Comparative Example 2 was obtained.

### Comparative Example 3

Synthesis of a negative electrode material: 30g commercialized porous carbon (a BET specific surface area is 900 m²/g, and a pore volume is 0.5 cm³/g) was placed into a vapor deposition furnace. Mixed gas of high-purity argon and monosilane in a volume ratio of 9:1 was introduced at a flow rate of 300 sccm. Then, a temperature was raised to 475°C to crack the monosilane, and a total cracking duration was controlled to 10 h. Afterward, a sample was taken out. In this way, the negative electrode material in Comparative Example 3 was obtained.

### Comparative Example 4

Synthesis of a negative electrode material: 30g commercialized porous carbon (a BET specific surface area is 900 m²/g, and a pore volume is 0.5 cm³/g) was placed into a vapor deposition furnace. Mixed gas of high-purity argon and monosilane in a volume ratio of 9:1 was introduced at a flow rate of 300 sccm. Then, a temperature was raised to 475°C to crack the monosilane, and a total cracking duration was controlled to 10 h. Afterward, a sample was taken out, placed into a tube furnace in an argon atmosphere, and heated at 700°C for 8 h. In this way, the negative electrode material in Comparative Example 4 was obtained.

### Comparative Example 5

Synthesis of a negative electrode material: 30g commercialized porous carbon (a BET specific surface area is 900 m²/g, and a pore volume is 0.5 cm³/g) was placed into a vapor deposition furnace. Mixed gas of high-purity argon and monosilane in a volume ratio of 9:1 was introduced at a flow rate of 300 sccm. Then, a temperature was raised to 475°C to crack the monosilane, and a total cracking duration was controlled to 10 h. Afterward, a sample was taken out, placed into a tube furnace in an argon atmosphere, heated at 700°C for 8 h, placed into a muffle furnace, and heated at 120°C for 8 h. In this way, the negative electrode material in Comparative Example 5 was obtained.

In the negative electrode materials prepared in the foregoing examples and the comparative examples, the negative electrode material corresponds to a diffraction peak 1 in a range of 2θ = 23.0° ± 0.5° in an X-ray powder diffraction (XRD) test, and a ratio of a peak height value to a peak width value of the diffraction peak 1 is x1; and the negative electrode material corresponds to a diffraction peak 2 in a range of 2θ = 28.4° ± 0.5°, and a ratio of a peak height value to a peak width value of the diffraction peak 2 is x2. The negative electrode material corresponds to a binding energy peak in a high resolution spectrum in a range of 90 eV to 110 eV in an X-ray photoelectron spectroscopy (XPS) test. The binding energy peak is divided into a binding energy peak 1 in 97 eV to 100 eV and a binding energy peak 2 in 101 eV to 104 eV by using peak division software. An area of the binding energy peak 1 is y1. An area of the binding energy peak 2 is y2. In the negative electrode material, a mass content of a carbon element is a, and a mass content of a silicon element is b. Test results are shown in Table 1.

**Table 1 Performance test results of the negative electrode materials in examples and comparative examples**

| | x1 | x2 | y1/y2 | a | b | a + b |
|---|---|---|---|---|---|---|
| Example 1 | 71 | 35 | 0.33 | 51% | 44% | 95% |
| Example 2 | 66 | 39 | 0.41 | 48% | 47% | 95% |
| Example 3 | 61 | 40 | 0.42 | 47% | 49% | 96% |
| Example 4 | 60 | 38 | 0.40 | 48% | 49% | 97% |
| Example 5 | 61 | 39 | 0.41 | 48% | 50% | 98% |
| Example 6 | 58 | 28 | 0.26 | 45% | 47% | 92% |
| Example 7 | 56 | 25 | 0.22 | 44% | 46% | 90% |
| Example 8 | 57 | 72 | 0.99 | 46% | 47% | 93% |
| Example 9 | 23 | 23.3 | 1.01 | 13% | 76% | 89% |
| Comparative Example 1 | 17 | 15000 | 12.0 | 35% | 60% | 95% |
| Comparative Example 2 | 800 | 10 | 6.10 | 74% | 20% | 94% |
| Comparative Example 3 | 60 | 41 | 16.0 | 49% | 51% | 100% |
| Comparative Example 4 | 67 | 1500 | 19.0 | 49% | 51% | 100% |
| Comparative Example 5 | 66 | 1400 | 0.37 | 48% | 50% | 98% |

It can be learned from Table 1 that, for the negative electrode materials prepared in Examples 1 to 9, in the X-ray powder diffraction (XRD) test, a ratio of a peak height value to a peak width value of the diffraction peak 1 in the range of 2θ = 23.0° ± 0.5° is x1, and a ratio of a peak height value to a peak width value of the diffraction peak 2 in the range of 2θ = 28.4° ± 0.5° is x2, where x1 and x2 meet that 0 < x1 ≤ 200 and 0 < x2 ≤ 500. For the negative electrode materials prepared in Examples 1 to 9, in the X-ray photoelectron spectroscopy (XPS) test, the binding energy peak in the high resolution spectrum in a range of 90 eV to 110 eV is divided into the binding energy peak 1 in 97 eV to 100 eV and the binding energy peak 2 in 101 eV to 104 eV by using Origin software, where the area y1 of the binding energy peak 1 and the area y2 of the binding energy peak 2 meet that 0 ≤ y1/y2 ≤ 10.

The foregoing results indicate that a core of the negative electrode material in Examples 1 to 8 includes a non-graphitizing porous carbon material and amorphous silicon, and a surface of the core includes a shell layer of a silicon-containing compound in which a silicon valence is greater than zero. In addition, in the negative electrode material that meets the foregoing conditions, a content a of a carbon element and a content b of a silicon element meet that 25% ≤ a < 100%, 0 < b ≤ 75%, and 90% ≤ a + b < 100%, to ensure that the negative electrode material has a relatively small impurity content.

In the negative electrode materials prepared in Comparative Examples 1, 4, and 5, x2 does not meet that 0 < x2 ≤ 500, which indicates that crystallization of silicon in the negative electrode material is strong. In the negative electrode material prepared in Comparative Example 2, x1 does not meet that 0 < x1 ≤ 200, which indicates that the carbon material in the negative electrode material has a high degree of graphitization and a structure is regular. In the negative electrode materials prepared in Comparative Examples 1, 3, and 4, y1 and y2 do not meet that 0 ≤ y1/y2 ≤ 10. In addition, the content a of the carbon element and the content b of the silicon element in the negative electrode materials prepared in Comparative Examples 1 to 5 also meet that 25% ≤ a < 100%, 0 < b ≤ 75%, and 90% ≤ a + b < 100%, which indicates that the contents of the main elements in the negative electrode material are close to those in Examples 1 to 8. In the negative electrode material prepared in Example 9, the content a of the carbon element and the content b of the silicon element do not meet that 25% ≤ a < 100%, 0 < b ≤ 75%, and 90% ≤ a + b < 100%, which indicates that a content of an impurity element in the negative electrode material is large.

The negative electrode materials in the foregoing examples and comparative examples are assembled into button-type half batteries for a test. A specific manufacturing method is as follows:
(1) The negative electrode material prepared above, artificial graphite, sodium carboxymethyl cellulose, styrene-butadiene rubber, and Super P were mixed in a mass ratio of 50:46.5:1.6:1.6:0.3, deionized water was added, and mixing was evenly performed by using a vacuum mixer, to obtain a negative electrode slurry.
(2) Copper foil was coated with the negative electrode slurry in step (1), and the negative electrode slurry on the copper foil was dried in an oven at 80°C and then transferred to a vacuum oven at 100°C for 12 h, to obtain a negative electrode plate with a surface density of about 6.0 mg/cm².
(3) In a dry environment, the negative electrode plate in step (2) was rolled and compacted at about 1.3 g/cm³, and then a round negative electrode plate with a diameter of 12 mm was manufactured by using a sheet-punching machine.
(4) In a glove box, the round negative electrode plate in step (3) was used as a working electrode, a metal lithium plate was used as a counter electrode, a polyethylene separator with a thickness of 20 µm was used as a separator, and an electrolyte solution was added, to obtain a button-type half battery through assembling. Performance of the button-type half battery was tested by using a land (LAND) test system. A test temperature was 25°C. Details are as follows:
Lithium intercalation was performed at a current of 0.1 mA to 0.005 V, and the button-type half battery was set aside for 10 min. Lithium intercalation was performed at a current of 0.05 mA to 0.005 V, and the button-type half battery was set aside for 10 min. Then, lithium deintercalation was performed at a current of 0.1 mA to 1.5 V. An initial lithium intercalation capacity and an initial lithium deintercalation capacity were obtained. The initial lithium deintercalation capacity was divided by a mass of the negative electrode material in the foregoing round negative electrode plate to obtain a capacity per gram of the negative electrode material. The initial lithium deintercalation capacity was divided by the initial lithium intercalation capacity to obtain an initial Coulombic efficiency of the negative electrode material. Test results are shown in Table 2.

**Table 2 Performance test results of button-type half batteries in examples and comparative examples**

| | Capacity per gram(mAh/g) | Initial Coulombic efficiency |
|---|---|---|
| Example 1 | 1125.2 | 90.44% |
| Example 2 | 1137.6 | 90.71% |
| Example 3 | 1153.3 | 90.92% |
| Example 4 | 1168.1 | 90.92% |
| Example 5 | 1204.2 | 91.11% |
| Example 6 | 1140.5 | 89.04% |
| Example 7 | 1133.2 | 92.63% |
| Example 8 | 1149.4 | 90.21% |
| Example 9 | 1539.8 | 91.38% |
| Comparative Example 1 | 1394.6 | 83.52% |
| Comparative Example 2 | 789.9 | 89.41% |
| Comparative Example 3 | 1188.4 | 92.02% |
| Comparative Example 4 | 879.5 | 81.65% |
| Comparative Example 5 | 812.7 | 79.39% |

It can be learned from Table 2 that the capacities per gram of the button-type half batteries prepared in Examples 1 to 8 each range from 1120 mAh/g to 1210 mAh/g, and the initial Coulombic efficiencies each are above 89%. A difference is not large. The button-type half battery prepared in Example 9 has a relatively high capacity per gram and initial Coulombic efficiency because of a relatively high content of silicon in the button-type half battery. The capacities per gram and the initial Coulombic efficiencies of the button-type half batteries prepared in Comparative Examples 1 to 5 are greatly different. The button-type half battery prepared by using a conventional pyrolytic carbon-encapsulated silicon material in Comparative Example 1 has a relatively high capacity per gram and a relatively low initial Coulombic efficiency. The capacity per gram of the button-type half battery prepared in Comparative Example 2 is relatively low. This is because when a graphitizing carbon material is used as a carbon material of a core, the core does not have enough space to accommodate silicon. Consequently, a lithium storage capacity of the prepared negative electrode material is limited. The capacity per gram and the initial Coulombic efficiency of the button-type half battery prepared in Comparative Example 3 are similar to those of the examples. The capacities per gram and the initial Coulombic efficiencies of the button-type half batteries prepared in Comparative Examples 4 and 5 are relatively low. This is because silicon is crystallized in porous carbon to block pores of carbon, resulting in a large decrease in lithium intercalation kinetics of the negative electrode material and a large decrease in lithium storage performance of the negative electrode material.

The materials in the foregoing examples and comparative examples are assembled into batteries. A specific manufacturing method is as follows:
(1) The negative electrode material prepared above, artificial graphite, sodium carboxymethyl cellulose, styrene-butadiene rubber, and Super P were mixed in a mass ratio of 50:46.5:1.6:1.6:0.3, and deionized water was added, to obtain a negative electrode slurry by using a vacuum mixer. Copper foil with a thickness of 8 µm was evenly coated with the negative electrode slurry. A surface density of the negative electrode slurry coated on a surface of a negative electrode current collector is 11.0 mg/cm². The copper foil coated with the negative electrode slurry was transferred to an oven at 80°C for drying for 12 h. Then rolling and cutting were performed to obtain a negative electrode plate.
(2) Lithium cobalt oxide (LCO), polyvinylidene fluoride (PVDF), acetylene black, and carbon nanotubes (CNTs) were mixed in a mass ratio of 96:2:1.5:0.5, N-methylpyrrolidone was added, and stirring was performed by using a vacuum mixer until a mixture was mixed evenly, to obtain a positive electrode slurry. Aluminum foil with a thickness of 12 µm was evenly coated with the positive electrode slurry. The aluminum foil coated with the positive electrode slurry was baked in an oven, transferred to an oven at 120°C for drying for 8 h, and then rolled and cut to obtain a needed positive electrode plate. A size of the positive electrode plate is smaller than that of a negative electrode plate. A reversible capacity of a unit area of the positive electrode plate is 4% lower than that of the negative electrode plate.
(3) A polyethylene separator with a thickness of 8 µm was selected.
(4) The positive electrode plate prepared above, the separator, and the negative electrode plate were stacked in an order, to ensure that the separator separates the positive electrode plate from the negative electrode plate. Then, a bare cell was obtained through winding. The bare cell was placed into an aluminum-plastic film shell. An electrolyte solution was injected into the dried bare cell. Processes such as vacuum encapsulation, setting aside, forming, shaping, and sorting were executed, to obtain a needed battery. A land (LAND) test system was used to test performance of the batteries. A test temperature was 25°C. Details are as follows:
(4-1) The battery was charged at a constant current of 0.7 C to 4.45 V, charged at a constant voltage to 0.05 C, and set aside for 10 minutes. The battery was discharged at 0.2 C to 3.0 V, to obtain a discharge capacity. The discharge capacity was used as a nominal capacity. The nominal capacity was multiplied by an average discharge voltage to obtain battery energy. The battery energy was divided by a battery volume to obtain a battery energy density. Test results are shown in Table 3.
(4-2) The battery was charged at a constant current of 0.7 C to 3.85 V, and charged at a constant voltage to 0.01 C. A battery thickness was measured in this time, and was used as an initial battery thickness. The battery was charged at a constant current of 1.5 C to 4.45 V, charged at a constant voltage to 0.05 C, and set aside for 10 min. The battery was discharged at 1 C to 3.0 V and set aside for 10 min. The charging and discharging steps were performed as a cycle. A maximum value of discharge capacities in first three cycles was used as an initial battery capacity. A ratio of a capacity after 500 cycles to the initial capacity was a capacity retention rate of the battery. A thickness of the battery after 500 cycles was measured. A difference between the thickness and the initial thickness was divided by the initial thickness to obtain a volume expansion rate of the battery. Test results are shown in Table 3.

**Table 3 Performance test results of batteries in examples and comparative examples**

| | Nominal capacity mAh | Energy density Wh/L | Capacity retention rate after 500 cycles | Volume expansion rate after 500 cycles |
|---|---|---|---|---|
| Example 1 | 3521 | 817 | 90.64% | 8.03% |
| Example 2 | 3537 | 818 | 90.49% | 8.31% |
| Example 3 | 3554 | 820 | 90.13% | 8.08% |
| Example 4 | 3568 | 825 | 90.06% | 8.06% |
| Example 5 | 3591 | 833 | 90.96% | 8.22% |
| Example 6 | 3546 | 828 | 90.37% | 8.42% |
| Example 7 | 3533 | 827 | 90.42% | 8.17% |
| Example 8 | 3558 | 830 | 90.50% | 8.21% |
| Example 9 | 3646 | 839 | 25.90% | 22.14% |
| Comparative Example 1 | 3605 | 837 | 55.49% | 16.91% |
| Comparative Example 2 | 3323 | 749 | 60.77% | 15.88% |
| Comparative Example 3 | 3573 | 819 | 65.19% | 15.66% |
| Comparative Example 4 | 3568 | 755 | 43.17% | 18.73% |
| Comparative Example 5 | 3552 | 749 | 45.01% | 18.45% |

It can be learned from Table 3 that the nominal capacities of the batteries in Examples 1 to 8 are all within a range of 3520 mAh to 3600 mAh, and energy densities are all within a range of 815 Wh/L to 835 Wh/L. A difference is not large. The nominal capacities and the energy densities in Comparative Examples 1 to 5 fluctuate greatly according to different structural features. Rules and reasons thereof are similar to those described in Table 2. After 500 cycles, the capacity retention rates of the batteries in Examples 1 to 8 each range from 90% to 91%, and the batteries present good cycling stability performance. However, the capacity retention rates of the batteries in Comparative Examples 1 to 5 are low, and the batteries present poor stability. In addition, after 500 cycles, the volume expansion rates of the batteries in Examples 1 to 8 each range from 8.0% to 8.5%, and the volume expansion rates of the batteries in Comparative Examples 1 to 5 each are greater than 15% that is obviously higher than an average level of the examples.

The foregoing describes the implementations of the present disclosure. However, the present disclosure is not limited to the foregoing implementations. Any modification, equivalent replacement, improvement, or the like made without departing from the spirit and the principle of the present disclosure shall fall within the protection scope of the present disclosure.

## Claims

1. A negative electrode material, wherein the negative electrode material has a core-shell structure, the core-shell structure comprises a shell layer and a core, the shell layer comprises at least one of silicon monoxide, silicon dioxide, or lithium silicate, the core comprises a carbon material and a silicon material, the carbon material comprises a non-graphitizing porous carbon material, and the silicon material comprises amorphous silicon.

2. The negative electrode material according to claim 1, wherein the carbon material is a non-graphitizing porous carbon material, and the silicon material is amorphous silicon; and
preferably, a coverage rate of the shell layer on a surface of the core ranges from 33% to 100%.

3. The negative electrode material according to claim 1 or 2, wherein a thickness of the shell layer is less than or equal to 10 nm; and
preferably, the thickness of the shell layer ranges from 0.01 nm to 10 nm.

4. The negative electrode material according to any one of claims 1 to 3, wherein a median particle size Dv50 of the amorphous silicon ranges from 0.5 nm to 15 µm; and/or
the non-graphitizing porous carbon material is non-graphitizing porous hard carbon.

5. The negative electrode material according to any one of claims 1 to 4, wherein a specific surface area BET of the non-graphitizing porous carbon material ranges from 200 m²/g to 2000 m²/g; and
preferably, the specific surface area BET of the non-graphitizing porous carbon material ranges from 900 m²/g to 1300 m²/g.

6. The negative electrode material according to any one of claims 1 to 5, wherein a pore volume of the non-graphitizing porous carbon material ranges from 0.2 cm³/g to 1.2 cm³/g;
preferably, the pore volume of the non-graphitizing porous carbon material ranges from 0.5 cm³/g to 0.7 cm³/g; and/or
a pore diameter of the non-graphitizing porous carbon material ranges from 0.5 nm to 100 nm.

7. The negative electrode material according to any one of claims 1 to 6, wherein the negative electrode material corresponds to a diffraction peak 1 in a range of 2θ = 23.0° ± 0.5° in an X-ray powder diffraction test, and a ratio x1 of a peak height value to a peak width value of the diffraction peak 1 meets that 0 < x1 ≤ 200; and the negative electrode material corresponds to a diffraction peak 2 in a range of 2θ = 28.4° ± 0.5°, and a ratio x2 of a peak height value to a peak width value of the diffraction peak 2 meets that 0 < x2 ≤ 500; and
preferably, 0 < x1 ≤ 100, and 0 < x2 ≤ 100.

8. The negative electrode material according to any one of claims 1 to 7, wherein the negative electrode material corresponds to a binding energy peak in a range of a total spectrum of 96 eV to 105 eV in an X-ray photoelectron spectroscopy test, and the binding energy peak in a high resolution spectrum in a range of 90 eV to 110 eV may be divided at least into a binding energy peak 1 whose area is y1 in 97 eV to 100 eV and a binding energy peak 2 whose area is y2 in 101 eV to 104 eV, wherein y1 and y2 meet that 0 ≤ y1/y2 ≤ 10; and
preferably, 0.2 ≤ y1/y2 ≤ 5.

9. The negative electrode material according to any one of claims 1 to 8, wherein in the negative electrode material, a mass content a of a carbon element meets that 25% ≤ a < 100%, a mass content b of a silicon element meets that 0 < b < 75%, and 90% ≤ a + b < 100%; and
preferably, 25% <_ a <_ 95%, and 5% < b < 75%.

10. The negative electrode material according to any one of claims 1 to 9, wherein a specific surface area BET of the negative electrode material ranges from 0.5 m²/g to 20 m²/g; and/or
a median particle size Dv50 of the negative electrode material ranges from 1 µm to 20 µm.

11. A negative electrode plate, wherein the negative electrode plate comprises the negative electrode material according to any one of claims 1 to 10.

12. The negative electrode plate according to claim 11, wherein the negative electrode plate comprises a negative electrode current collector and a negative electrode active material layer on at least one side surface of the negative electrode current collector, and the negative electrode active material layer comprises the negative electrode material according to any one of claims 1 to 10.

13. The negative electrode plate according to claim 11 or 12, wherein the negative electrode active material layer further comprises at least one of graphite, hard carbon, or soft carbon; and
preferably, the graphite comprises any one of artificial graphite or natural graphite; and/or
the negative electrode active material layer further comprises a conductive agent; and
preferably, the conductive agent is selected from one or more of carbon black, acetylene black, Ketjen black, a carbon fiber, a single-walled carbon nanotube, and a multi-walled carbon nanotube.

14. The negative electrode plate according to any one of claims 11 to 13, wherein the negative electrode active material layer further comprises a binder; and
preferably, the binder is selected from one or more of carboxymethyl cellulose, sodium carboxymethyl cellulose, lithium carboxymethyl cellulose, hydroxypropyl cellulose, cellulose acetate, polyethylene, poly(vinyl alcohol), polyvinyl chloride, polyvinyl fluoride, polyvinylpyrrolidone, polytetrafluoroethylene, polypropylene, styrene-butadiene rubber, and epoxy resin.

15. A battery, wherein the battery comprises the negative electrode material according to any one of claims 1 to 10 and/or the negative electrode plate according to any one of claims 11 to 14.
